# EUROPÄISCHE PATENTSCHRIFT

(11) **EP 2 047 153 B1**
(45) Veröffentlichungstag und Bekanntmachung des Hinweises auf die Patenterteilung: **26.05.2010**
(21) Anmeldenummer: 07785878.5
(22) Anmeldetag: 30.06.2007
(51) Int. Cl.: F16K 11/044, F16K 11/048, F15C 3/02

(54) **VENTIL MIT UND-FUNKTION**
VALVE WITH AN AND-FUNCTION
SOUPAPE À FONCTION ET

(43) Veröffentlichungstag der Anmeldung: 15.04.2009
(73) Patentinhaber: FESTO AG & Co. KG, 73734 Esslingen (DE)
(72) Erfinder: QUENDT, Volker, 72669 Unterensingen (DE); DANNER, Tobias, 73760 Ostfildern (DE)
(74) Vertreter: Abel, Martin
(86) Internationale Anmeldenummer: PCT/EP2007/005821
(87) Internationale Veröffentlichungsnummer: WO 2009/003500

(56) Entgegenhaltungen:
- DE-U1- 20 014 697
- FR-A- 1 585 127
- GB-A- 982 016

## Beschreibung

Die Erfindung betrifft ein Ventil mit UND-Funktion, bei dem ein relativ zu einem Ventilgehäuse bewegbares Ventilglied die Fluidverbindung zwischen zwei Eingängen und einem Ausgang steuert, wobei seine Schaltstellung von der Druckdifferenz der an den beiden Eingängen anstehenden Fluiddrücke abhängt, derart, dass bei gleichen Eingangsdrücken wenigstens ein Eingang mit dem Ausgang verbunden ist, und wobei das Ventilglied zwei einander entgegengesetzte Endstellungen einnehmen kann, in denen es jeweils einen von zwei mit dem Auslass verbundenen gehäusefesten ersten Durchlässen freigibt und gleichzeitig den anderen ersten Durchlass absperrt.

Ein solches Ventil wurde bereits in GB 982 016 offenbart.

Ein mit derartigen Merkmalen ausgestattetes Ventil ist auch aus dem Produktkatalog "Der Pneumatic-Katalog 97/98", Ausgabe 97/98, 33. Auflage, Festo AG & Co., Seite 11.5/10-2 bekannt. Das Ventil hat einen Ausgang und zwei Eingänge, wobei an dem Ausgang immer dann ein Druck ansteht, wenn beide Eingänge gleichzeitig mit einem Fluiddruck versorgt werden. Bei gleichen Eingangsdrücken ist die Schaltstellung indifferent und ist der Ausgang mit nur einem oder gleichzeitig mit beiden Eingängen verbunden. Steht eingangsseitig eine Druckdifferenz an, gelangt stets der niedrigere Druck zum Ausgang.

Aus dem gleichen Produktkatalog geht aus Seite 11.5/10-1 ein ODER-Ventil hervor, das ebenfalls zwei Eingänge und einen Ausgang aufweist. Hier gelangt an den Ausgang stets der größere der beiden Eingangsdrücke. Der mit geringerem Druck gespeiste Eingang wird abgesperrt.

Die DE 22 51 963 A offenbart ein Logikventil mit einem Eingang und zwei Ausgängen. Hier wird das durch den ständig offenen Eingang zufließende Druckmedium wechselweise durch die beiden Ausgänge abgeführt, wobei der Wechsel immer dann erfolgt, wenn der Eingangsdruck auf Null zurückgeht oder sich um einen vorgegebenen Wert verringert.

In sicherheitsrelevanten fluidischen Schaltungen kann das Erfordernis bestehen, einen Verbraucher stets gleichzeitig aus zwei Druckquellen zu versorgen und die Versorgung aus Sicherheitsgründen abzusperren, wenn einer dieser Drücke eine gewisse Schwelle unterschreitet, beispielsweise weil in der Zuleitung ein Leck aufgetreten ist. Es besteht also Bedarf an einer fluidischen Schaltung, die abweichend von dem vorgenannten bekannten UND-Ventil einen Verbraucher vollständig von der Druckversorgung abtrennt, wenn eingangsseitig eine gewisse Druckdifferenz auftritt.

Es ist daher die Aufgabe der vorliegenden Erfindung, Maßnahmen zu treffen, um bei einer eingangsseitig zu großen Druckdifferenz einen Ausgang komplett von der Fluidversorgung abzutrennen.

Diese Aufgabe wird bei einem die eingangs genannten Merkmale aufweisenden Ventil dadurch gelöst, dass zwei mit jeweils einem der beiden Eingänge verbundene zweite Durchlässe vorhanden sind, die jeweils Bestandteil eines von zwei in der Betätigungsrichtung des Ventilgliedes relativ zu dem Ventilgehäuse beweglichen Durchlassgliedern sind, die durch Beaufschlagungsmittel unabhängig voneinander in nachgiebiger Weise mit einer Beaufschlagungskraft derart in eine Grundstellung vorgespannt sind, dass sich das Ventilglied vor Erreichen seiner Endstellungen je nach Betätigungsrichtung an dem einen oder anderen Durchlassglied abstützen und dabei dessen zweiten Durchlass verschließen kann, so dass der zugeordnete Eingang vom Ausgang abgetrennt ist, wobei durch die Höhe der Beaufschlagungskraft ein Grenzwert der eingangsseitigen Druckdifferenz definiert wird, bei dessen Überschreiten das Ventilglied das von ihm beaufschlagte und verschlossene Durchlassglied zurückdrängen kann, um sich in eine der Endstellungen zu bewegen und dadurch beide Eingänge vom Ausgang abzutrennen.

Das erfindungsgemäße Ventil lässt ein Druckmedium zum Ausgang durch, wenn an den beiden Eingängen der gleiche Eingangsdruck anliegt. Übersteigt die eingangsseitige Druckdifferenz einen durch die Beaufschlagmittel definierten Grenzwert, wird der Ausgang von beiden Eingängen abgetrennt. Dies geschieht dadurch, dass das Ventilglied zum einen den dem einen Eingang zugeordneten gehäusefesten ersten Durchlass und zum anderen, gleichzeitig, den dem anderen Einlass zugeordneten zweiten Durchlass an dem einen der beweglichen Durchlassglieder absperrt. Solange eine eingangsseitige Druckdifferenz auftritt, die den vorgegebenen Grenzwert nicht überschreitet, trennt das Ventilglied durch Zusammenwirken mit dem entsprechenden Durchlassglied nur den den niedrigeren Eingangsdruck aufweisenden Eingang ab, so dass der Ausgang weiterhin aus dem anderen Eingang mit dem höheren Eingangsdruck versorgt wird.

Das Ventil kann beispielsweise als Sicherheitsventil eingesetzt werden, wobei es eine Logikfunktion erfüllt und am Ausgang nur dann ein Signal ausgibt, solange eingangsseitig eine gewisse Druckdifferenz nicht überschritten wird. Das Ventil kann beispielsweise auch verwendet werden, um die Synchronität zweier den beiden Eingängen vorgeschalteter Steuerventile zu kontrollieren. Ein Ausgangssignal wird dann nur erzeugt, wenn die beiden Steuerventile innerhalb eines vorgegebenen Toleranzbereiches gleich hohe Drucksignale erzeugen.

Vorteilhafte Weiterbildungen der Erfindung gehen aus den Unteransprüchen hervor.

Zweckmäßigerweise ist den beiden ersten Durchlässen je ein gehäusefester erster Ventilsitz zugeordnet, dem jeweils eine am Ventilglied angeordnete erste Dichtfläche gegenüberliegt. In den beiden Endstellungen wird der jeweils eine erste Durchlass abgesperrt, indem die ihm zugewandte erste Dichtfläche an seinem Ventilsitz anliegt. Der andere erste Durchlass ist hierbei offen, wobei jedoch gleichwohl kein Fluid hindurchströmt, weil zugleich der am zugeordneten Durchlassglied vorgesehene zweite Durchlass abgesperrt ist.

Vorzugsweise sind je eine erste Dichtfläche und eine zweite Dichtfläche paarweise an zwei zueinander beabstandeten Verschlusstellern des Ventilgliedes angeordnet.

Die Durchlässe sind insbesondere so angeordnet, dass jeweils ein gehäusefester erster Durchlass und ein an einem Durchlassglied angeordneter zweiter Durchlass fluidisch in Reihe geschaltet sind.

Die Grundstellung der Durchlassglieder ist zweckmäßigerweise jeweils durch eine am Ventilgehäuse angeordnete Anschlagfläche definiert, an die das zugeordnete Durchlassglied durch die Beaufschlagungsmittel angedrückt wird.

Zweckmäßigerweise befindet sich das Ventilglied in der Betätigungsrichtung axial zwischen den beiden Durchlassgliedern, wird von diesen also zweckmäßigerweise auf axial entgegengesetzten Seiten flankiert.

Die Durchlassglieder sind unter Bildung des ihnen zugeordneten zweiten Durchlasses zweckmäßigerweise ringförmig ausgebildet. Sie können nach Art von Kolben verschiebbar im Ventilgehäuse gelagert sein. Zweckmäßigerweise sind sie koaxial zum Ventilglied angeordnet.

Jedes Durchlassglied trägt zweckmäßigerweise eine Dichtung, über die es unter Gewährleistung seiner Verschiebbarkeit in ständigem Dichtkontakt mit dem Ventilgehäuse steht. Um eine dynamische Dichtung zu vermeiden, könnte alternativ auch eine am Durchlassglied und am Gehäuse jeweils statisch angebrachte Membran als Dichtelement vorgesehen sein.

Bei den Beaufschlagungsmitteln handelt es sich zweckmäßigerweise um jeweils eine Druckfedereinrichtung, insbesondere mechanischer Art. Denkbar wäre allerdings auch eine Gasfeder, insbesondere eine Luftfeder.

Nachfolgend wird die Erfindung unter Bezugnahme auf die beiliegende Zeichnung näher erläutert. Diese zeigt im Längsschnitt eine bevorzugte Ausführungsform des mit einer UND-Funktion ausgestatteten Ventils in unterschiedlichen Schaltstellungen, wobei
- Figur 1: das Ventil in einer gleichzeitig beide Eingänge mit dem Ausgang verbindenden Schaltstellung zeigt,
- Figur 2: das Ventil in einer Schaltstellung zeigt, in der einlassseitig eine noch unter dem Grenzwert liegen- de Druckdifferenz ansteht und folglich der Ausgang mit dem den höheren Druck führenden Eingang verbun- den und von dem den niedrigeren Druck führenden Eingang abgetrennt ist, und
- Figur 3: eine Schaltstellung zeigt, in der das Ventilglied aufgrund einer den Grenzwert überschrittenen ein- gangsseitigen Druckdifferenz in eine seiner beiden möglichen Endstellungen verlagert ist und dadurch der Ausgang von beiden Eingängen abgetrennt ist.

Das insgesamt mit Bezugsziffer 1 bezeichnete Ventil ist als Schieberventil ausgebildet und verfügt über ein schieberartiges, längliches Ventilglied 2, das im Innern eines Ventilgehäuses 3 angeordnet ist und dort eine durch einen Doppelpfeil angedeutete lineare Umschaltbewegung 4 in Richtung seiner Längsachse 5 ausführen kann.

Im Inneren des Ventilgehäuses 3 ist eine längliche Ausnehmung 6 ausgebildet, deren Längsachse 7 mit derjenigen (5) des Ventilgliedes 2 zusammenfällt. Das Ventilglied 2 ist in der Ausnehmung 6 aufgenommen.

Die Ausnehmung 6 enthält einen mittleren Abschnitt 8, in den ein zu einem von außen her zugänglichen Ausgang A führender Ausgangskanal 12 des Ventilgehäuses 3 einmündet. An den mittleren Abschnitt 8 schließt sich axial beidseitig je ein im Querschnitt größerer Zwischenabschnitt 13a, 13b der Ausnehmung 6 an, wobei der Übergang zwischen dem mittleren Abschnitt 8 und jedem Zwischenabschnitt 13a, 13b durch einen axial orientierten ersten Durchlass 14a, 14b definiert ist. Jeder dieser beiden ersten Durchlässe 14a, 14b ist von einem axial zum sich anschließenden Zwischenabschnitt 13a, 13b weisenden ersten Ventilsitz 15a, 15b umrahmt, der am Ventilgehäuse 3 ausgebildet ist. Die beiden ersten Ventilsitze 15a, 15b weisen in der Achsrichtung der Längsachse 7 in einander entgegengesetzte Richtungen.

An jeden Zwischenabschnitt 13a, 13b schließt sich in Richtung der Längsachse 7 auf der dem mittleren Abschnitt 8 entgegengesetzten Seite ein Endabschnitt 16a, 16b der Ausnehmung 6 an. Der Endabschnitt 16a, 16b hat, zumindest in dem sich unmittelbar an einen Zwischenabschnitt 13a, 13b anschließenden Bereich, einen größeren Querschnitt als der sich anschließende Zwischenabschnitt 13a, 13b, so dass eine Ringstufe gebildet ist, die eine zum jeweiligen Endabschnitt 16a, 16b weisende ringförmige Anschlagfläche 17a, 17b definiert.

Der eine, erste Endabschnitt 16a steht über einen ersten Eingangskanal 18a ständig mit einem am Ventilgehäuse 3 ausgebildeten ersten Eingang E1 in Verbindung. In vergleichbarer Weise kommuniziert der entgegengesetzte zweite Endabschnitt 16b über einen zweiten Eingangskanal 18b mit einem von dem ersten Eingang E1 unabhängigen zweiten Eingang E2 am Ventilgehäuse 3.

In jedem der beiden Endabschnitte 16a, 16b ist ein axial von einem zweiten Durchlass 22a, 22b durchsetztes, bezüglich sowohl dem Ventilgehäuse 3 als auch dem Ventilglied 2 gesondert und unabhängig ausgebildetes Durchlassglied 23a, 23b angeordnet. Jedes Durchlassglied 23a, 23b ist in der Richtung der Umschaltbewegung 4 relativ zum Ventilgehäuse 3 beweglich. Exemplarisch ist es an der Innenumfangsfläche 24 des zugeordneten Endabschnittes 16a, 16b axial verschiebbar geführt, vergleichbar einem Kolbenelement. Über eine im Bereich seines Außenumfanges angeordnete ringförmige Dichtung 25 ist jedes Durchlassglied 23a, 23b unabhängig von der aktuell eingenommenen Axialposition gegenüber dem Ventilgehäuse 3 abgedichtet.

Das Durchlassglied 23a, 23b ist so im Endabschnitt 16a, 16b angeordnet, dass es stets zwischen dem benachbarten Zwischenabschnitt 13a, 13b und dem Einmündungsbereich des in den zugeordneten Endabschnitt 16a, 16b einmündenden Eingangskanals 18a, 18b zu liegen kommt. Dadurch steht jeder Eingang E1, E2 unabhängig von der aktuellen Verschiebeposition des zugeordneten Durchlassgliedes 23a, 23b mit dem das Durchlassglied 23a, 23b axial durchsetzenden zweiten Durchlass 22a, 22b in Verbindung.

Der zweite Durchlass 22a, 22b durchsetzt das Durchlassglied 23a, 23b insbesondere mittig, so dass letzteres ringförmig ausgebildet ist. Es ist koaxial zum Ventilglied 2 angeordnet, wobei das Ventilglied 2 axial zwischen den beiden Durchlassgliedern 23a, 23b platziert ist.

Jeder zweite Durchlass 22a, 22b ist an der dem Zwischenabschnitt 13a, 13b zugewandten Stirnseite von einem am Durchlassglied 23a, 23b ausgebildeten zweiten Ventilsitz 26a, 26b umrahmt. Letzterer kann sich also gemeinsam mit dem zugeordneten Durchlassglied 23a, 23b in der Richtung der Umschaltbewegung 4 relativ zum Ventilgehäuse 3 verlagern.

Das Ventilglied 2 ist in den innerhalb der Zwischenabschnitte 13a, 13b liegenden Bereichen mit je einem Verschlussteller 27a, 27b versehen. Bei diesem Verschlussteller 27a, 27b handelt es sich beispielsweise um ein aus Dichtmaterial, insbesondere aus gummielastischem Material bestehendes Ringelement, das an einem beispielsweise aus Metall oder einem harten Kunststoffmaterial bestehenden länglichen Grundkörper 28 des Ventilgliedes 2 radial abstehend befestigt ist. Jeder Verschlussteller 27a, 27b trägt an seinen einander entgegengesetzten Stirnflächen zwei axial voneinander wegweisende Dichtflächen, und zwar zum einen eine dem ersten Ventilsitz 15a, 15b zugewandte erste Dichtfläche 32a, 32b und zum anderen eine dem zweiten Ventilsitz 26a, 26b zugewandte zweite Dichtfläche 33a, 33b. Die beiden ersten Dichtflächen 32a, 32b sind einander zugewandt, die beiden zweiten Dichtflächen 33a, 33b weisen in Richtung der Umschaltbewegung 4 voneinander weg.

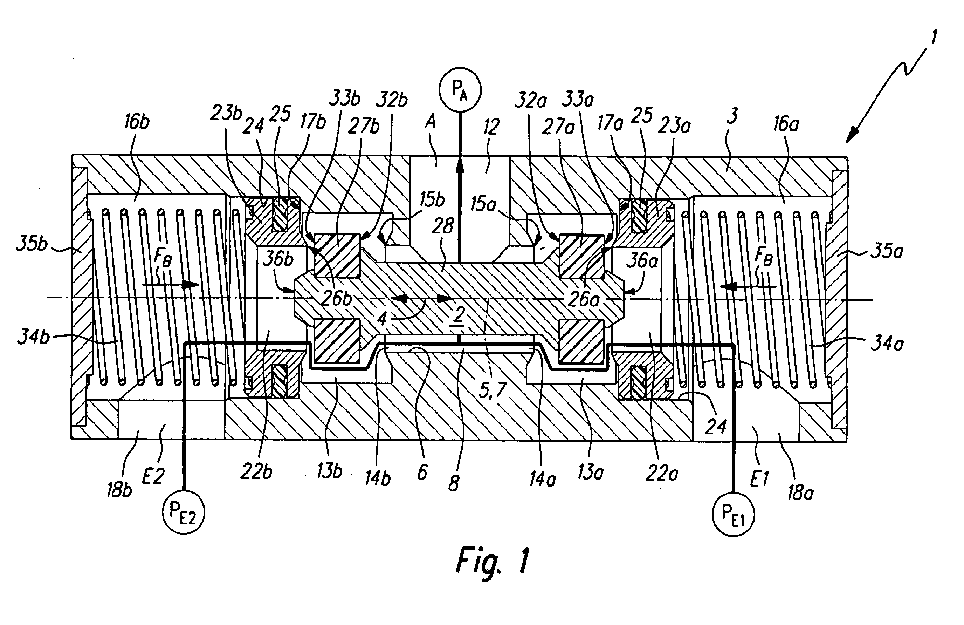

In jedem Endabschnitt 16a, 16b der Ausnehmung 6 sind Beaufschlagungsmittel 34a, 34b untergebracht, die jeweils zwischen dem Ventilgehäuse 3 und dem zugeordneten Durchlassglied 23a, 23b wirksam sind und letzteres in eine beispielsweise aus Figur 1 ersichtliche Grundstellung vorspannen, in der das Durchlassglied 23a, 23b an der ihm zugeordneten Anschlagfläche 17a, 17b anliegt. Die Beaufschlagungsmittel 34a, 34b drücken also das Durchlassglied 23a, 23b jeweils in Richtung zum Ventilglied 2 gegen die zugeordnete gehäusefeste Anschlagfläche 17a, 17b.

Die beiderseitigen Beaufschlagungsmittel 34a, 34b sind unabhängig voneinander ausgebildet. Sie beaufschlagen das zugeordnete Durchlassglied 23a, 23b in nachgiebiger Weise mit je einer Beaufschlagungskraft F_{B}. Vorzugsweise sind die Beaufschlagungsmittel 34a, 34b von je einer mechanischen Druckfedereinrichtung gebildet, beispielsweise von einer Schraubendruckfeder, die sich axial zwischen dem zugeordneten Durchlassglied 23a, 23b und einer diesem axial gegenüberliegenden, den Endabschnitt 16a, 16b außen dicht abschließenden Abschlusswand 35a, 35b des Ventilgehäuses 3 erstrecken.

Die Höhe der Beaufschlagungskraft F_{B} hängt von der Auslegung der Druckfedereinrichtung ab. Bei Bedarf können Einstellmittel vorhanden sein, mit denen sich die Vorspannung der Beaufschlagungsmittel 34a, 34b variieren lässt, um die Beaufschlagungskraft F_{B} wunschgemäß vorzugeben.

Die auf die beiden Durchlassglieder 23a, 23b durch die Beaufschlagungsmittel 34a, 34b ausgeübten Beaufschlagungskräfte F_{B} sind zweckmäßigerweise gleich groß.

Anstelle einer mechanischen Druckfedereinrichtung könnte beispielsweise auch eine Luftfedereinrichtung zum Einsatz kommen, insbesondere auf der Basis eines eingeschlossenen Luftvolumens.

Das Ventilglied 2 durchsetzt den mittleren Abschnitt 8 und ragt in die sich anschließenden Zwischenabschnitte 13a, 13b und, bei entsprechender Schaltstellung, auch noch ein Stück weit in den sich anschließenden Endabschnitt 16a, 16b hinein.

Über die beiden Eingänge E1, E2 ist jeweils ein fluidisches Druckmedium einspeisbar, wobei das Ventil 1 zweckmäßigerweise mit Druckluft betrieben wird. Andere Medien sind aber ebenfalls möglich.

Über den jeweiligen Eingangskanal 18a, 18b, den sich daran anschließenden Endabschnitt 16a, 16b und den sich daran anschließenden zweiten Durchlass 22a, 22b ist das Ventilglied 2 von entgegengesetzten Seiten her jeweils von dem über die beiden Eingänge E1, E2 eingespeisten Druckmedium beaufschlagt. Die hierbei relevanten stirnseitigen Beaufschlagungsflächen des Ventilgliedes 2 sind gleichgroß und bei 36a, 36b kenntlich gemacht. Das am Eingang E1 eingespeiste Druckmedium wirkt mit einem ersten Eingangsdruck P_{E1} in der einen Betätigungsrichtung auf das Ventilglied 2, während das über den zweiten Eingang E2 eingespeiste Druckmedium mit einem zweiten Eingangsdruck P_{E2} in entgegengesetzter Richtung auf das Ventilglied 2 einwirkt.

Der am Ausgang A anstehende Ausgangsdruck P_{A} wirkt in beiden Betätigungsrichtungen auf das Ventilglied 2 ein, wobei die von ihm beaufschlagten Flächen ebenfalls gleich groß sind, so dass insofern ein Druckkraftausgleich vorliegt.

Folglich wird die jeweilige Schaltstellung des Ventilgliedes 2 und mithin des Ventils 1 durch die eingangsseitige Druckdifferenz zwischen dem ersten und zweiten Eingangsdruck P_{E1}. P_{E2} vorgegeben. Das Ventilglied wird in Richtung des niedrigeren Eingangsdruckes durch eine von der eingangsseitigen Druckdifferenz abhängige resultierende Umschaltkraft beaufschlagt.

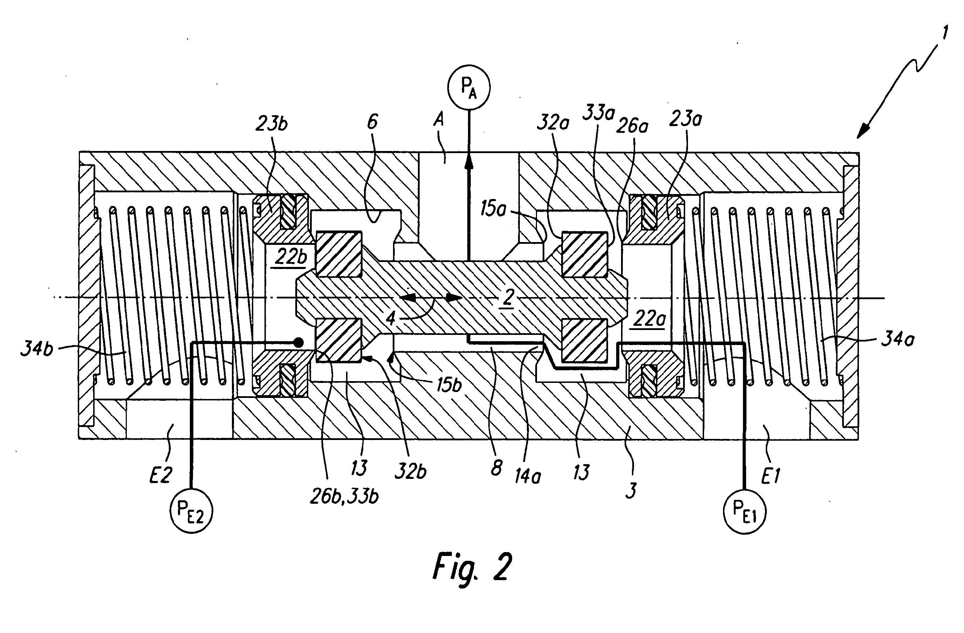

Die ersten und zweiten Ventilsitze 15a, 15b, 26a, 26b sowie die ersten Dichtflächen 32a, 32b und zweiten Dichtflächen 33a, 33b sind in ihrer Ausbildung und Anordnung so aufeinander abgestimmt, dass dann, wenn eine der zweiten Dichtflächen 33a oder 33b am zweiten Ventilsitz 26a, 26b eines in Grundstellung befindlichen Durchlassgliedes 23a, 23b anliegt, alle anderen Dichtflächen von dem ihnen zugeordneten Ventilsitz abgehoben sind. Eine dieser beiden möglichen Zwischenstellungen des Ventilgliedes 2 ist aus Figur 2 ersichtlich.

Wirkt eine ausreichend hohe Betätigungskraft auf das Ventilglied 2, kann dieses über die genannte Zwischenstellung (Figur 2) hinaus noch weiter bis in eine Endstellung verlagert werden. Diese Endstellung ist dadurch definiert, dass das Ventilglied 2 mit der in der Umschaltrichtung weisenden ersten Dichtfläche 32a oder 32b an dem ihr gegenüberliegenden ersten Ventilsitz 15a, 15b zur Anlage gelangt ist, wodurch der zugeordnete erste Durchlass 14a oder 14b abgesperrt ist. Diese Endstellungen zeichnen sich weiterhin dadurch aus, dass das Ventilglied 2 das ihm in der Betätigungsrichtung vorgelagerte Durchlassglied 23a oder 23b aus der Grundstellung entgegen der auf es einwirkenden Beaufschlagungskraft F_{B} ein Stück weit ausgelenkt hat. Die Auslenkung wird durch die momentan in der Betätigungsrichtung orientierte zweite Dichtfläche 33a oder 33b veranlasst, die auf den gegenüberliegenden zweiten Ventilsitz 26a oder 26b und mithin auf das zugeordnete Durchlassglied 23a, 23b eine entsprechende Schubkraft 37 ausübt. Der zweite Durchlass 22a oder 22b des hierdurch zurückgedrängten Durchlassgliedes 23a oder 23b ist hierbei verschlossen. Die für die Dichtwirkung mit verantwortliche Gegenkraft liefert die auf das Durchlassglied 23a, 23b einwirkende Beaufschlagungskraft F_{B}.

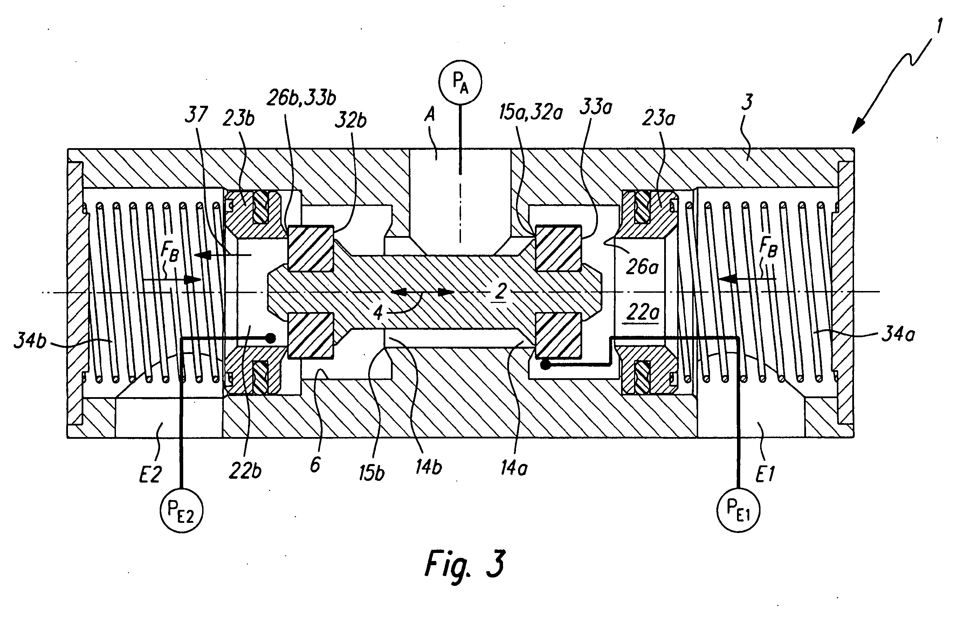

Eine der beiden möglichen Endstellungen des Ventilgliedes 2 ist in Figur 3 illustriert.

Bei einer bevorzugten Anwendung wird das Ventil als Sicherheitsventil oder als Logikventil eingesetzt, das am Ausgang A nur dann ein eingangsseitig eingespeistes Druckmedium ausgibt, wenn die Druckdifferenz zwischen den an den beiden Eingängen E1, E2 gleichzeitig anstehenden Eingangsdrücken P_{E1}, P_{E1} einen vorbestimmten Grenzwert nicht überschreitet. Beim Überschreiten des Druckdifferenz-Grenzwertes sperrt das Ventil den Ausgang A von sowohl dem ersten Eingang E1 als auch dem zweiten Eingang E2 ab.

Der für die Umschaltcharakteristik des Ventils verantwortliche Grenzwert der eingangsseitigen Druckdifferenz wird durch die Beaufschlagungskraft F_{B} der Beaufschlagungsmittel 34a, 34b bestimmt. Das Ventilglied 2 schaltet in eine die beiden Eingänge E1, E2 vom Ausgang A absperrende Endstellung um, wenn die auf das Ventilglied 2 auf Basis der eingangsseitigen Druckdifferenz einwirkende resultierende Betätigungskraft größer ist als die in Gegenrichtung wirkende Beaufschlagungskraft F_{B} der einen oder anderen Beaufschlagungsmittel 34a, 34b.

Die Figur 1 zeigt einen Betriebszustand mit identischen Eingangsdrücken P_{E1}, P_{E2}. Das Ventilglied 2 nimmt hier eine indifferente Schaltstellung ein, die variieren kann, wobei entweder - wie aus den eingezeichneten Strömungspfeilen ersichtlich - gleichzeitig von beiden Eingängen E1, E2 Druckmedium zum Ausgang A strömt oder von nur jeweils einem der beiden Eingänge E1 oder E2.

Der Ausgang A wird darüber hinaus auch dann noch vom höheren der beiden Eingangsdrücke P_{E1}, P_{E2} versorgt, wenn eingangsseitig eine Druckdifferenz anliegt, die den eingestellten Grenzwert noch nicht überschritten hat. Eine solche Zwischenstellung zeigt die Figur 2. Aufgrund des hier bezüglich dem zweiten Eingangsdruck P_{E2} etwas höheren ersten Eingangsdruck P_{E1} hat das Ventilglied 2 den zweiten Durchlass 22b des dem zweiten Eingang E2 zugeordneten Durchlassgliedes 23b abgesperrt, wobei gleichzeitig die dem ersten Eingang E1 zugeordneten, fluidisch in Reihe geschalteten ersten und zweiten Durchlässe 14a, 22a offen sind, um den höheren ersten Eingangsdruck P_{E1} zum Ausgang A durchzulassen.

In dieser Zwischenstellung stützt sich das Ventilglied 2 an dem den zweiten Eingang E2 zugeordneten Durchlassglied 23b ab, das durch die zugeordneten Beaufschlagungsmittel 34b in seiner Grundstellung fixiert ist.

Übersteigt die eingangsseitige Druckdifferenz den voreingestellten Grenzwert, kann das Ventilglied 2 gemäß Figur 3 das dem geringeren Eingangsdruck P_{E2} zugeordnete Durchlassglied 23b unter Überwindung der es beaufschlagenden Beaufschlagungskraft F_{B} zurückdrängen. Diese Verdrängungsbewegung endet, wenn das Ventilglied 2 am ersten Ventilsitz 15a anliegt. Damit ist sowohl der gehäusefeste erste Durchlass 14a abgesperrt als auch der an dem verdrängten Durchlassglied 23b ausgebildete zweite Durchlass 22b. Mithin ist die Verbindung zwischen dem Auslass A und jedem der beiden Eingänge E1, E2 unterbrochen.

Diese geschilderte Betriebsweise ist in beiden Bewegungsrichtungen des Ventilgliedes 2 möglich und hängt lediglich davon ab, welcher der beiden Eingangsdrücke E1, E2 größer ist als der andere.

Durch das Ventil 1 ist sichergestellt, dass der Ausgang A bei Erreichen einer eingangsseitigen Druckdifferenz vorbestimmter Höhe komplett von den Eingängen E1, E2 abgesperrt ist, dass aber der Ausgang A bis zum Erreichen des Grenzwertes auf jeden Fall mit dem höheren der beiden aktuell anstehenden Eingangsdrücke versorgt wird.

## Patentansprüche

1. Ventil mit UND-Funktion, bei dem ein relativ zu einem Ventilgehäuse (3) bewegbares Ventilglied (2) die Fluidverbindung zwischen zwei Eingängen (E1, E2) und einem Ausgang (A) steuert, wobei seine Schaltstellung von der Druckdifferenz der an den beiden Eingängen (E1, E2) anstehenden Fluiddrücke abhängt, derart, dass bei gleichen Eingangsdrücken wenigstens ein Eingang (E1, E2) mit dem Ausgang (A) verbunden ist, und wobei das Ventilglied (2) zwei einander entgegengesetzte Endstellungen einnehmen kann, in denen es jeweils einen von zwei mit dem Auslass (A) verbundenen gehäusefesten ersten Durchlässen (14a, 14b) freigibt und gleichzeitig den anderen ersten Durchlass (14b, 14a) absperrt, **dadurch gekennzeichnet, dass** zwei mit jeweils einem der beiden Eingänge (E1, E2) verbundene zweite Durchlässe (22a, 22b) vorhanden sind, die jeweils Bestandteil eines von zwei in der Betätigungsrichtung des Ventilgliedes (2) relativ zu dem Ventilgehäuse (3) beweglichen Durchlassgliedern (23a, 23b) sind, die durch Beaufschlagungsmittel (34a, 34b) unabhängig voneinander in nachgiebiger Weise mit einer Beaufschlagungskraft derart in eine Grundstellung vorgespannt sind, dass sich das Ventilglied (2) vor Erreichen seiner Endstellungen je nach Betätigungsrichtung an dem einen oder anderen Durchlassglied (23a, 23b) abstützen und dabei dessen zweiten Durchlass (22a, 22b) verschließen kann, so dass der zugeordnete Eingang (E1 oder E2) vom Ausgang (A) abgetrennt ist, wobei durch die Höhe der Beaufschlagungskraft ein Grenzwert der eingangsseitigen Druckdifferenz definiert wird, bei dessen Überschreiten das Ventilglied (2) das von ihm beaufschlagte und verschlossene Durchlassglied (23a, 23b) zurückdrängen kann, um sich in eine der Endstellungen zu bewegen und **dadurch** beide Eingänge (E1, E2) vom Ausgang (A) abzutrennen.

2. Ventil nach Anspruch 1, **dadurch gekennzeichnet, dass** das Ventilglied (2) zwei einander zugewandte erste Dichtflächen (32a, 32b) aufweist, denen jeweils ein einen der ersten Durchlässe (14a, 14b) definierender gehäusefester erster Ventilsitz (15a, 15b) gegenüberliegt, wobei in den beiden Endstellungen des Ventilgliedes (2) jeweils eine der ersten Dichtflächen (32a, 32b) am gegenüberliegenden ersten Ventilsitz (15a, 15b) anliegt und die andere erste Dichtfläche (32b, 32a) an dem ihr gegenüberliegenden ersten Ventilsitz (15b, 15a) abgehoben ist.

3. Ventil nach Anspruch 2, **dadurch gekennzeichnet, dass** das Ventilglied (2) zwei von einander abgewandte zweite Dichtflächen (33a, 33b) aufweist, denen jeweils ein an einem der Durchlassglieder (23a, 23b) einen der zweiten Durchlässe (22a, 22b) definierender zweiter Ventilsitz (26a, 26b) gegenüberliegt, derart, dass beim Anliegen einer der zweiten Dichtflächen (33a, 33b) an dem ihr zugeordneten zweiten Ventilsitz (26a, 26b) die jeweils andere zweite Dichtfläche (33b, 33a) von dem ihr zugeordneten zweiten Ventilsitz (26b, 26a) abgehoben ist.

4. Ventil nach Anspruch 3, **dadurch gekennzeichnet, dass** je eine erste Dichtfläche (32a, 32b) und eine zweite Dichtfläche (33a, 33b) an einander entgegengesetzten Stirnflächen zweier in der Betätigungsrichtung zueinander beabstandeter Verschlussteller (27a, 27b) des Ventilgliedes (2) angeordnet sind.

5. Ventil nach einem der Ansprüche 1 bis 4, **dadurch gekennzeichnet, dass** je ein erster Durchlass (14a, 14b) und ein zweiter Durchlass (22a, 22b) fluidisch in Reihe geschaltet sind, wobei das Ventilglied (2) jeweils entweder den ersten Durchlass (14a, 14b) oder den zweiten Durchlass (22a, 22b) absperren kann.

6. Ventil nach einem der Ansprüche 1 bis 5, **dadurch gekennzeichnet, dass** die Grundstellung der Durchlassglieder (23a, 23b) **dadurch** definiert ist, dass das Ventilglied (2) an einem in Grundstellung befindlichen Durchlassglied (23a, 23b) unter Absperrung des dortigen zweiten Durchlasses (22a, 22b) anliegen kann, ohne gleichzeitig den anderen zweiten Durchlass (22b, 22a) und die beiden ersten Durchlässe (14a, 14b) abzusperren.

7. Ventil nach einem der Ansprüche 1 bis 6, **dadurch gekennzeichnet, dass** die Grundstellung jedes Durchlassgliedes (23a, 23b) durch eine gehäusefeste Anschlagfläche (17a, 17b) definiert ist, an die das Durchlassglied (23a, 23b) durch die Beaufschlagungsmittel (34a, 34b) angedrückt wird.

8. Ventil nach einem der Ansprüche 1 bis 7, **dadurch gekennzeichnet, dass** das Ventilglied (2) axial zwischen den beiden Durchlassgliedern (23a, 23b) angeordnet ist.

9. Ventil nach einem der Ansprüche 1 bis 8, **dadurch gekennzeichnet, dass** die Durchlassglieder (23a, 23b) zur Bildung ihres zweiten Durchlasses (22a, 22b) ringförmig ausgebildet sind.

10. Ventil nach einem der Ansprüche 1 bis 9, **dadurch gekennzeichnet, dass** die Durchlassglieder (23a, 23b) koaxial zum Ventilglied (2) angeordnet sind.

11. Ventil nach einem der Ansprüche 1 bis 10, **dadurch gekennzeichnet, dass** jedes Durchlassglied (23a, 23b) im Ventilgehäuse (3) verschiebbar gelagert ist.

12. Ventil nach einem der Ansprüche 1 bis 11, **dadurch gekennzeichnet, dass** jedes Durchlassglied (23a, 23b) eine Dichtung (25) trägt, über die es mit dem Ventilgehäuse (3) in ständigem Dichtkontakt steht.

13. Ventil nach einem der Ansprüche 1 bis 12, **dadurch gekennzeichnet, dass** die Beaufschlagungsmittel (34a, 34b) von jeweils einer Druckfedereinrichtung gebildet sind.

14. Ventil nach einem der Ansprüche 1 bis 13, **dadurch gekennzeichnet, dass** das Ventilgehäuse (3) eine längliche Ausnehmung (6) aufweist, in der das Ventilglied (2) axial zwischen den beiden Durchlassgliedern (23a, 23b) angeordnet ist, wobei die auf der dem Ventilglied (2) axial entgegengesetzten Seite der Durchlassglieder (23a, 23b) liegenden äußeren Endabschnitte (16a, 16b) der Ausnehmung (6) mit jeweils einem der beiden Eingänge (E1, E2) kommunizieren und zugleich die Beaufschlagungsmittel (34a, 34b) aufnehmen.

## Claims

1. Valve with AND function, wherein a valve member (2) movable relative to a valve housing (3) controls the fluid connection between two inlets (E1, E2) and an outlet (A), its switching position depending on the fluid pressures applied to the two inlets (E1, E2) in such a way that, if the inlet pressures are equal, at least one inlet (E1, E2) is connected to the outlet (A), and the valve member (2) being capable of adopting two opposite end positions in each of which it opens one of two first passages (14a, 14b) of the housing which are connected to the outlet (A) while simultaneously blocking the other first passage (14b, 14a), **characterised in that** two second passages (22a, 22b), each of which is connected to one of the two inlets (E1, E2), are provided, each of which is a part of one of two passage elements (23a, 23b) movable relative to the valve housing (3) in the operating direction of the valve member (2), which passage elements are independently and in a resilient manner preloaded by pressurisation means (34a, 34b) towards a normal position with a pressurisation force such that the valve member (2), before reaching its end positions, can be supported on one or the other passage element (23a, 23b) while blocking its second passage (22a, 22b), so that the associated inlet (E1 or E2) is isolated from the outlet (A), wherein the level of the pressurisation force defines a limit value of the inlet-side pressure differential which, when exceeded, enables the valve member (2) to force back the pressurised and blocked passage element (23a, 23b) in order to move into one of the end positions and thus isolate both inlets (E1, E2) from the outlet (A).

2. Valve according to claim 1, **characterised in that** the valve member (2) has two first sealing faces (32a, 32b) facing each other, opposite each of which is disposed a first valve seat (15a, 15b) of the housing, which defines one of the first passages (14a, 14b), wherein in each of the two end positions of the valve member (2) one of the first sealing faces (32a, 32b) bears against the opposite first valve seat (15a, 15b) while the other first sealing face (32b, 32a) is moved off the opposite first valve seat (15b, 15a).

3. Valve according to claim 2, **characterised in that** the valve member (2) has two second sealing faces (33a, 33b) facing away from each other, opposite each of which a second valve seat (26a, 26b) defining one of the second passages (22a, 22b) on one of the passage elements (23a, 23b) is disposed such that, when one of the second sealing faces (33a, 33b) bears against the associated second valve seat (26a, 26b), the other second sealing face (33b, 33a) is moved off the associated second valve seat (26b, 26a).

4. Valve according to claim 3, **characterised in that** one each of the first sealing faces (32a, 32b) and one each of the second sealing faces (33a, 33b) are located on opposite end faces of two closing discs (27a, 27b) of the valve member (2) which are arranged at a distance from each other.

5. Valve according to any of claims 1 to 4, **characterised in that** one each of the first passages (14a, 14b) and the second passages (22a, 22b) are fluidically connected in series, the valve member (2) being capable of blocking either the first passage (14a, 14b) or the second passage (22a, 22b).

6. Valve according to any of claims 1 to 5, **characterised in that** the normal position of the passage elements (23a, 23b) is defined by the fact that the valve member (2) can bear against a passage member (23a, 23b) in its normal position while blocking the associated second passage (22a, 22b) without simultaneously blocking the other second passage (22b, 22a) and the two first passages (14a, 14b).

7. Valve according to any of claims 1 to 6, **characterised in that** the normal position of each passage element (23a, 23b) is defined by a stop face (17a, 17b) of the housing, against which the passage element (23a, 23b) is pushed by the pressurisation means (34a, 34b).

8. Valve according to any of claims 1 to 7, **characterised in that** the valve member (2) is disposed axially between the two passage elements (23a, 23b).

9. Valve according to any of claims 1 to 8, **characterised in that** the passage elements (23a, 23b) are designed annular to form their respective second passages (22a, 22b).

10. Valve according to any of claims 1 to 9, **characterised in that** the passage elements (23a, 23b) are disposed coaxial relative to the valve member (2).

11. Valve according to any of claims 1 to 10, **characterised in that** each passage element (23a, 23b) is displaceably mounted in the valve housing (3).

12. Valve according to any of claims 1 to 11, **characterised in that** each passage element (23a, 23b) is provided with a seal (25) for continuous sealing contact with the valve housing (3).

13. Valve according to any of claims 1 to 12, **characterised in that** each of the pressurisation means (34a, 34b) is represented by a compression spring device.

14. Valve according to any of claims 1 to 13, **characterised in that** the valve housing (3) has an oblong recess (6) in which the valve member (2) is axially disposed between the two passage elements (23a, 23b), wherein each of the outer end sections (16a, 16b) of the recess (6) which are located on the side of the passage elements (23a, 23b) which is axially opposite the valve member (2) communicates with one of the two inlets (E1, E2) while accommodating the pressurisation means (34a, 34b).

## Revendications

1. Soupape à fonction ET, dans de laquelle un organe de soupape (2) mobile par rapport à un boîtier de soupape (3) commande la liaison fluidique entre deux entrées (E1, E2) et une sortie (A), sa position de commutation dépendant de la différence entre les pressions de fluide présentes aux deux entrées (E1, E2) de telle sorte que dans le cas de pressions d'entrée identiques, au moins une entrée (E1, E2) est reliée à la sortie (A), et l'organe de soupape (2) pouvant adopter deux positions finales opposées l'une à l'autre dans lesquelles il libère respectivement un des deux premiers passages (14a, 14b) fixés par rapport au boîtier et reliés à la sortie (A) et obture en même temps l'autre premier passage (14b, 14a), **caractérisée en ce que** sont prévus deux deuxièmes passages (22a, 22b) reliés à respectivement une des deux entrées (E1, E2), lesquels font respectivement partie d'un de deux organes de passage (23a, 23b) mobiles par rapport au boîtier de soupape (3) dans la direction d'actionnement de l'organe de soupape (2), qui sont précontraints dans une position de base par des moyens de sollicitation (34a, 34b) indépendamment l'un de l'autres de manière élastique avec une force de sollicitation de telle manière que l'organe de soupape (2) peut s'appuyer avant d'atteindre ses positions finales en fonction du sens d'actionnement sur l'un ou l'autre organe de passage (23a, 23b) et obturer ce faisant son deuxième passage (22a, 22b), si bien que l'entrée associé (E1 ou E2) est séparée de la sortie (A), une valeur limite de la différence de pression côté entrée étant définie par la valeur de la force de sollicitation, lors du dépassement de laquelle l'organe de soupape (2) peut repousser l'organe de passage (23a, 23b) qu'il a sollicité et obturé pour se déplacer dans une des positions finales et séparer ainsi les deux entrées (E1, E2) de la sortie (A).

2. Soupape selon la revendication 1, **caractérisée en ce que** l'organe de soupape (2) présente deux premières surfaces d'étanchéité (32a, 32b) tournées l'une vers l'autre, auxquelles fait face respectivement un premier siège de soupape (15a, 15b) fixe par rapport au boîtier, définissant un des premiers passages (14a, 14b), tandis que dans les deux positions finales de l'organe de soupape (2), respectivement une des premières surfaces d'étanchéité (32a, 32b) s'applique contre le premier siège de soupape (15a, 15b) opposé et l'autre première surface d'étanchéité (32b, 32a) est soulevée au niveau du premier siège de soupape (15b, 15a) qui lui fait face.

3. Soupape selon la revendication 2, **caractérisée en ce que** l'organe de soupape (2) présente deux deuxièmes surfaces d'étanchéité (33a, 33b) opposées l'une à l'autre, auxquelles fait face respectivement un deuxième siège de soupape (26a, 26b) définissant un des deuxièmes passages (22a, 22b) au niveau d'un des organes de passage (23a, 23b) de telle sorte qu'en cas d'application d'une des deuxièmes surfaces d'étanchéité (33a, 33b) contre le deuxième siège de soupape (26a, 26b) qui lui est associé, respectivement l'autre deuxième surface d'étanchéité (33b, 33a) est soulevée du deuxième siège de soupape (26b, 26a) qui lui est associé.

4. Soupape selon la revendication 3, **caractérisée en ce que** respectivement une première surface d'étanchéité (32a, 32b) et une deuxième surface d'étanchéité (33a, 33b) sont disposées au niveau de surfaces frontales opposées l'une à l'autre de deux disques d'obturation (27a, 27b) de l'organe de soupape (2) espacés l'un de l'autre dans le sens d'actionnement.

5. Soupape selon l'une des revendications 1 à 4, **caractérisée en ce que** respectivement un premier passage (14a, 14b) et un deuxième passage (22a, 22b) sont montés en série du point de vue fluidique, l'organe de soupape (2) pouvant fermer respectivement soit le premier passage (14a, 14b) soit le deuxième passage (22a, 22b).

6. Soupape selon l'une des revendications 1 à 5, **caractérisée en ce que** la position de base des organes de passage (23a, 23b) est définie par le fait que l'organe de soupape (2) peut s'appliquer contre un organe de passage (23a, 23b) se trouvant dans la position de base en obturant le deuxième passage (22a, 22b) s'y trouvant, sans obturer en même temps l'autre deuxième passage (22b, 22a) et les deux premiers passages (14a, 14b).

7. Soupape selon l'une des revendications 1 à 6, **caractérisée en ce que** la position de base de chaque organe de passage (23a, 23b) est définie par une surface de butée (17a, 17b) fixe par rapport au boîtier contre laquelle l'organe de passage (23a, 23b) est pressé par les moyens de sollicitation (34a, 34b).

8. Soupape selon l'une des revendications 1 à 7, **caractérisée en ce que** l'organe de soupape (2) est disposé axialement entre les deux organes de passage (23a, 23b).

9. Soupape selon l'une des revendications 1 à 8, **caractérisée en ce que** les organes de passage (23a, 23b) sont réalisés de façon annulaire pour former leur deuxième passage (22a, 22b).

10. Soupape selon l'une des revendications 1 à 9, **caractérisée en ce que** les organes de passage (23a, 23b) sont disposés coaxialement à l'organe de soupape (2).

11. Soupape selon l'une des revendications 1 à 10, **caractérisée en ce que** chaque organe de passage (23a, 23b) est monté de manière coulissante dans le boîtier de soupape (3).

12. Soupape selon l'une des revendications 1 à 11, **caractérisée en ce que** chaque organe de passage (23a, 23b) porte un joint (25) par le biais duquel il est en contact étanche permanent avec le boîtier de soupape (3).

13. Soupape selon l'une des revendications 1 à 12, **caractérisée en ce que** les moyens de sollicitation (34a, 34b) sont formés par respectivement un dispositif à ressorts de compression.

14. Soupape selon l'une des revendications 1 à 13, **caractérisée en ce que** le boîtier de soupape (3) présente un évidement oblong (6), dans lequel l'organe de soupape (2) est disposé axialement entre les deux organes de passage (23a, 23b), les sections d'extrémité (16a, 16b) extérieures de l'évidement (6) situées du côté des organes de passage (23a, 23b) axialement opposé à l'organe de soupape (2) communiquant avec respectivement une des deux entrées (E1, E2) et recevant également les moyens de sollicitation (34a, 34b).
